# FASCICULE DE BREVET EUROPEEN

(11) **EP 3 015 740 B1**
(45) Date de publication et mention de la délivrance du brevet: **25.08.2021**
(21) Numéro de dépôt: 15191913.1
(22) Date de dépôt: 28.10.2015
(51) Int. Cl.: F16H 25/20, B64C 13/28, B64C 13/50, H02K 7/06

(54) **DISPOSITIF D'ACTIONNEMENT POUR DÉPLACER UNE PARTIE D'EMPENNAGE D'HÉLICOPTÈRE**
BETÄTIGUNGSVORRICHTUNG ZUM VERSCHIEBEN EINES TEILS DES LEITWERKS EINES HELIKOPTERS
ACTUATING DEVICE FOR MOVING A HELICOPTER TAIL PART

(30) Priorité: 29.10.2014 FR 1460410
(43) Date de publication de la demande: 04.05.2016
(73) Titulaire: Safran Electronics & Defense, 92100 Boulogne-Billancourt (FR)
(72) Inventeur: CREMIERE, Benoît, 92100 Boulogne-Billancourt (FR)
(74) Mandataire: Regimbeau

(56) Documents cités:
- WO-A1-2011/096913
- WO-A2-2008/112363
- FR-A- 1 520 646
- JP-A- 2005 299 726
- US-A1- 2004 007 923
- None

## Description

### DOMAINE GENERAL

L'invention se rapporte au domaine des actionneurs de commande de vol.

L'invention concerne plus particulièrement un dispositif d'actionnement prévu pour déplacer une partie de l'empennage d'un hélicoptère.

### ETAT DE L'ART

Un hélicoptère comprend une queue et un empennage localisé à l'extrémité de la queue. En particulier, l'empennage d'un hélicoptère comprend un plan horizontal, généralement fixe, destiné à stabiliser l'hélicoptère.

Il a été proposé de rendre ce plan horizontal mobile, notamment dans le but de faciliter la phase de décollage de l'hélicoptère. Le déplacement de ce plan horizontal mobile est alors contrôlé par un actionneur motorisé.

Cet actionneur positionne le plan horizontal dans une position « basse » au cours du décollage, cette position basse permettant de diminuer la puissance minimale requise pour l'élévation de l'hélicoptère.

Cet actionneur positionne le plan horizontal dans une position « haute » une fois que l'hélicoptère est en vol, c'est-à-dire une fois que la phase de décollage est terminée.

Or, un blocage de l'actionneur en position basse survenant alors que l'hélicoptère est en vol rend son pilotage difficile voire impossible, ayant pour conséquence catastrophique sa perte totale de contrôle. Un tel blocage est typiquement causé par un grippage dans une chaîne mécanique de l'actionneur, ou bien par une panne de son moteur, ou une combinaison de pannes.

L'actionneur du plan horizontal est donc un actionneur critique au sens de la sûreté de vol. Un tel actionneur est décrit dans le document WO2008/112363.

### PRESENTATION DE L'INVENTION

L'invention vise dès lors à proposer un dispositif d'actionnement pour déplacer une partie de l'empennage d'un hélicoptère, dont les risques de blocage sont réduits.
Dans ce but, il est proposé un dispositif d'actionnement pour déplacer une partie d'un empennage d'un hélicoptère, conformément à la revendication 1.

La mise en marche de l'un ou l'autre des deux moteurs permet un déplacement d'un plan horizontal relié mécaniquement au deuxième carter, par rapport au bâti d'un hélicoptère fixé au premier carter.

Ainsi, si l'élément de liaison se trouve bloqué en translation par rapport à l'un des deux carters (par exemple au premier carter en raison d'une panne du premier moteur ou d'un grippage du premier élément), l'élément de liaison peut encore être déplacé en translation par le deuxième moteur en combinaison avec le deuxième élément, et vice-versa.

Le dispositif d'actionnement peut également être complété par les caractéristiques suivantes, prises seules ou en une quelconque de leurs combinaisons techniquement possibles.

Le dispositif d'actionnement peut comprendre des premiers moyens de blocage en rotation de l'élément de liaison par rapport au premier carter et des deuxièmes moyens de blocage en rotation de l'élément de liaison par rapport au deuxième carter.

La présence des premiers moyens de blocage permet la transmission du mouvement en translation de l'élément de liaison au premier carter lorsque le premier moteur est mis en marche. Similairement, la présence des deuxièmes moyens de blocage permet d'améliorer la transmission du mouvement en translation de l'élément de liaison au premier carter lorsque le deuxième moteur est mis en marche.

Par ailleurs, les deux moyens de blocage permettent ensemble d'éviter une rotation du deuxième carter par rapport au premier carter.

Par ailleurs, un plan horizontal d'hélicoptère a vocation à ne pas subir de roulis. La présence conjuguée des premiers et deuxièmes moyens de blocage permet un déplacement d'un tel plan horizontal fixé au deuxième carter, par rapport au bâti d'un hélicoptère fixé au premier carter, sans que ce plan horizontal ne subisse de mouvement de roulis par rapport au bâti de l'hélicoptère.

L'un et/ou l'autre des moyens de blocage peut comprendre une gorge et un pion mobile dans la gorge.

Ce pion peut être solidaire de l'élément de liaison et la gorge ménagée dans l'un des carters.

Le premier élément et le deuxième élément sont deux écrous, et l'élément de liaison forme une vis couplée à chaque écrou.

L'une des parties, dite partie principale, peut comprendre deux moteurs, chaque moteur étant propre à entrainer en rotation l'élément monté mobile en rotation de la partie principale.

Ainsi, si l'un des moteurs de cette partie principale subit une défaillance, l'autre moteur peut être activé.

L'autre partie, dite partie auxiliaire, peut comprendre un seul moteur propre à entrainer en rotation l'élément mobile en rotation de la partie auxiliaire.

La partie principale peut être la première partie. La partie auxiliaire peut être la deuxième partie destinée à être fixée à la partie d'empennage mobile.

La partie principale peut comprendre un différentiel comprenant deux arbres d'entrée, chaque arbre d'entrée étant propre à être entraîné par l'un des deux moteurs, et un arbre de sortie propre à entraîner en rotation l'élément mobile en rotation de la partie principale.

Un tel différentiel autorise une activation simultanée de ces deux moteurs pour déplacer l'élément de liaison, selon des vitesses identiques ou différentes.

La partie principale peut comprendre un système de crabotage comprenant deux pignons d'entrée, chaque pignon d'entrée étant propre à être entraîné par l'un des deux moteurs, et un pignon de sortie propre à entraîner en rotation l'élément mobile en rotation de la partie principale, le système de crabotage étant adapté pour accoupler sélectivement le pignon de sortie avec l'un des deux pignon d'entrée.

Le système de crabotage permet d'isoler mécaniquement les deux moteurs l'un de l'autres, et ainsi éviter une situation de fonctionnement anormale des moteurs dans laquelle les moteurs sollicitent simultanément des rotations de l'arbre de sortie.

Le dispositif d'actionnement peut en outre comprendre une unité de commande configurée pour activer alternativement les deux moteurs de la partie principale.

Cette activation alternée permet de surmonter des pannes cachées.

Le dispositif peut en outre comprendre au moins un capteur de position de l'élément monté mobile en rotation de la partie principale.

L'unité de commande peut être configurée pour activer sélectivement le moteur de la partie auxiliaire, lorsque le capteur détecte une immobilité de l'élément monté mobile en rotation alors que l'un et/ou l'autre des moteurs de la partie principale est activé.

Un tel évènement signifie la présence d'un dysfonctionnement de la chaîne de transmission mécanique entre un moteur de la partie principale et l'élément de liaison. L'unité de commande et le capteur permettent de détecter un tel dysfonctionnement automatiquement et de faire en sorte que le dispositif puisse encore être utilisable en sollicitant le moteur de la partie auxiliaire en présence de ce dysfonctionnement de la partie principale.

Chaque partie peut comprendre un frein propre à bloquer le moteur de la partie, et l'unité de commande être configurée pour activer le frein lorsque le moteur n'est pas activé.

Lorsque le moteur d'une partie n'est pas activé, par exemple la partie auxiliaire, il se peut malgré tout que le déplacement en translation de l'élément de liaison suscité par la partie principale soit transmis à l'élément mobile en rotation de la partie auxiliaire. L'activation dans ce cas du frein de la partie auxiliaire permet d'éviter une telle transmission de mouvement et ainsi rendre solidaire l'élément de liaison avec la partie auxiliaire dont le moteur n'est pas sollicité.

Il est également proposé dans le cadre de la présente invention un hélicoptère comprenant un bâti, un plan horizontal, et un dispositif d'actionnement conforme à la description qui précède, le dispositif étant agencé pour déplacer le plan horizontal par rapport au bâti.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 représente schématiquement un dispositif d'actionnement selon un premier mode de réalisation de l'invention.
- La figure 2 est une première vue en coupe d'un dispositif d'actionnement selon un deuxième mode de réalisation de l'invention.
- La figure3 est une deuxième vue en coupe partielle du dispositif d'actionnement de la figure 2.
Sur l'ensemble des figures, les éléments similaires portent des références identiques.

### DESCRIPTION DETAILLEE DE L'INVENTION

Un hélicoptère comprend un bâti, le bâti comprenant une queue terminée par un empennage.

L'empennage comprend une partie mobile par rapport au bâti de l'hélicoptère, cette partie mobile comprenant notamment un plan horizontal.

L'hélicoptère comprend également un dispositif d'actionnement pour déplacer le plan horizontal de l'hélicoptère.

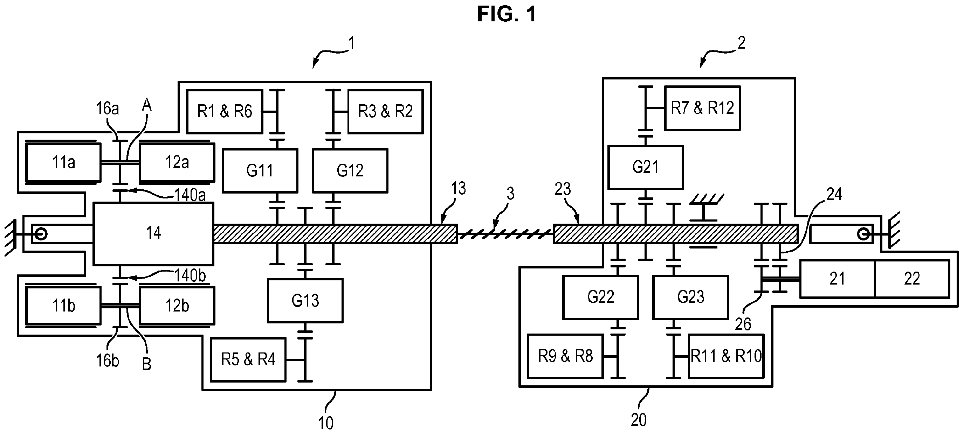

En référence à la figure 1, le dispositif d'actionnement comprend une première partie 1, une deuxième partie 2, et un élément de liaison 3 pour relier la première partie 1 avec la deuxième partie 2.

La deuxième partie 2 est mobile par rapport à la première partie 1.

La première partie 1 comprend un carter 10 propre à être fixé au bâti de l'hélicoptère, un élément 13 monté mobile en rotation par rapport au carter 10, et deux moteurs 11a, 11b, chaque moteur étant adapté pour entraîner l'élément 13 en rotation.

Le moteur 11a est monté fixe par rapport au carter 10 dans la première partie 1.

Le moteur 11b est également monté fixe par rapport au carter 10 dans la première partie 1.

Plus précisément, le moteur 11a est propre à entraîner l'élément 13 en rotation par l'intermédiaire d'une chaîne de transmission mécanique comprenant un arbre primaire A et un équipement 14 pouvant être un différentiel ou un système de crabotage.

L'équipement 14 comprend deux pignons d'entrée 140a, 140b et un pignon de sortie 141. L'arbre de sortie 141 est solidaire de l'élément mobile en rotation 13.

Si l'équipement 14 est un système de crabotage, il est adapté pour accoupler sélectivement le pignon de sortie 141 avec l'un des deux pignons d'entrée 140a ou 140b.

Si l'équipement 14 est un différentiel, il est adapté pour mettre en rotation l'élément 13 par distribution de mouvement en rotation des pignons d'entrée 140a, 140b.

L'arbre primaire A est monté en rotation sur le moteur 12a et comprend un pignon 16a qui engrène avec le pignon 140a.

La première partie 1 comprend en outre un frein 12a adapté pour bloquer le moteur 11a. Par exemple, le frein 12a est agencé en regard de ce moteur, l'arbre primaire étant monté en rotation sur le frein 12a.

Similairement, le moteur 11b est propre à entraîner l'élément 13 en rotation par l'intermédiaire d'une chaîne de transmission mécanique comprenant un autre arbre primaire B et l'équipement 14 précité.

L'arbre primaire B est monté en rotation sur le moteur 11b et comprend un pignon 16b qui engrène avec le pignon 140b.

La première partie 1 comprend en outre un frein 12b adapté pour bloquer le moteur 11b. Par exemple, le frein 12b est agencé en regard de ce moteur 11b, l'arbre primaire étant monté en rotation sur le frein 12b.

Par ailleurs, la deuxième partie 2 du dispositif d'actionnement comprend un carter 20 propre à être fixé à la partie mobile de l'empennage, un élément 23 monté mobile en rotation par rapport au carter 20, et un moteur 21 adapté pour entraîner l'élément en rotation 23.

Le moteur 21 est monté fixe par rapport au carter 20 dans la deuxième partie 2.

Plus précisément, le moteur 21 est propre à entraîner l'élément 23 en rotation par l'intermédiaire d'une chaîne de transmission mécanique comprenant un arbre primaire C. L'arbre primaire C est monté en rotation sur le deuxième moteur 21 et comprend un pignon 26.

L'élément mobile en rotation 23 est solidaire d'un pignon 24 qui engrène avec le pignon 26 de l'arbre primaire C.

La deuxième partie 2 comprend en outre un frein 22 adapté pour bloquer le moteur 21.

L'élément de liaison 3 reliant la partie 1 à la partie 2 forme avec le premier élément 13 une vis et un écrou. L'élément de liaison 3 forme par ailleurs avec le deuxième élément 23 une vis et un écrou.

L'élément 13 et/ou l'élément 23 peut être constitué de deux pièces montées précontraintes l'un contre l'autre pour assurer un jeu axial nul.

La première partie 1 et la deuxième partie 2 comprennent également une pluralité de capteurs de vitesse tels que des capteurs de type RVDT (« Rotary Variable Differential Transformer », en anglais). Dans le mode de réalisation illustré en figure 1, la première partie 1 comprend trois paires de capteurs R1 et R6, R2 et R3, R4 et R5, et la deuxième partie 2 comprend trois paires de capteurs R7 et R12, R8 et R9, R10 et R11. Chaque capteur est dédoublé une paire pour des raisons de sécurité : si l'un des capteurs d'une même paire est défaillant, l'autre capteur peut encore fonctionner.

Chaque capteur est adapté pour mesurer la position de l'écrou par rapport au carter le long de l'axe de l'écrou, par l'intermédiaire d'engrenages respectifs référencés G11, G12, G13, G21, G22 et G23.

Le dispositif comprend en outre une unité de commande (non-illustrée) adaptée pour activer/désactiver chaque moteur 11a, 11b, 21 et activer/désactiver chaque frein 12a, 12b, 22. L'unité de commande est également adaptée pour piloter le système de crabotage 14.

L'unité de commande est reliée aux capteurs de position et configurée pour traiter des mesures remontées par ces capteurs de position. L'unité de commande peut être plus précisément configurée pour calculer la valeur absolue de la différence entre une position mesurée par un capteur de la première partie, et une position mesurée par un capteur de la deuxième partie.

L'unité de commande peut également être reliée à un calculateur de vol d'aéronef.

Dans un hélicoptère, l'unité de commande peut typiquement être localisée dans une zone climatisée dans le fuselage communément appelée « niche à chien », et/ou dans la queue de l'hélicoptère.

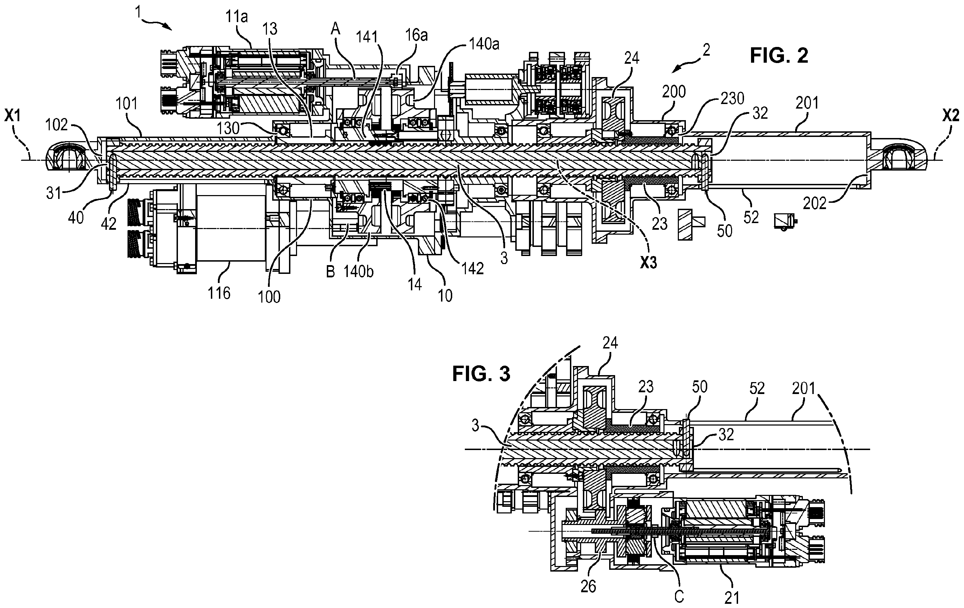

Dans un mode de réalisation illustré en figures 2 et 3, l'élément de liaison 3 forme une vis de liaison, et les éléments 13, 23 sont deux écrous adaptés pour coopérer avec la vis de liaison 3.

La vis de liaison 3 présente deux portions d'extrémité 31, 32 opposées et une portion médiane filetée 30.

La portion médiane filetée 30 s'étend sur toute la longueur de la vis de liaison suivant son axe longitudinal X3.

La portion d'extrémité 31 présente un pion 40 s'étendant radialement par rapport à l'axe longitudinal X3 de la vis 3, le pion faisant saillie par rapport au filetage de la portion médiane 30. Similairement, la portion d'extrémité 32 présente un pion 50 s'étendant radialement par rapport à l'axe longitudinal et faisant saillie par rapport au filetage de la portion médiane 30.

Le carter 10 de la première partie 1 comprend une paroi définissant un logement pour une portion de la vis 3, notamment la portion d'extrémité 31.

Cette paroi s'étend autour d'un axe longitudinal X1 et comprend deux portions le long de l'axe X1 : une première portion dite paroi 100 et une portion terminale 101, dite paroi terminale, qui prolonge la paroi 100.

L'écrou 13 et l'équipement 14, sont agencés dans le logement localisé entre la paroi 100 et l'axe longitudinal X1.

L'écrou 13 présente une forme globalement annulaire centrée sur l'axe X1 et présente un taraudage intérieur complémentaire du filetage 30 de la vis 3. L'écrou 13 présente une longueur suivant l'axe longitudinal qui est inférieure à la longueur de la portion médiane 30 filetée de la vis 3.

La première partie comprend également des roulements à billes 130 entre la paroi 101 et l'écrou 13. L'écrou 13 est mobile en rotation autour de l'axe longitudinal X1 par rapport à la paroi 100, et donc plus généralement par rapport au carter 10 de la partie 1.

Dans le mode de réalisation illustré en figure 2, l'équipement 14 agencé dans la partie 1 est un système de crabotage.

Le système de crabotage 14 comprend deux pignons d'entrée 140a et 140b de formes annulaires s'étendant autour de l'axe longitudinal X1 et mobiles en rotation par rapport à l'axe X1. Le pignon 140a engrène avec le pignon 16a de l'arbre primaire A, et le pignon 140b engrène avec le pignon 16b de l'arbre primaire de l'arbre primaire B.

Le système de crabotage 14 comprend également un pignon de sortie annulaire 141 agencé entre l'axe longitudinal X1 et les deux pignons d'entrée 140a et 104b, également mobile en rotation par rapport à l'axe X1. Le pignon de sortie 141 est aussi mobile en translation le long de l'axe X1, entre une première position dans laquelle il est en prise sélectivement avec le pignon d'entré 140a, et une deuxième position dans laquelle il est en prise sélectivement avec le pignon d'entrée 140b. Le pignon de sortie 141 de forme annulaire présente un diamètre interne au moins égal au diamètre externe du filetage 30 de la vis 3, de sorte que la portion intermédiaire 30 de la vis 3 puisse traverse le pignon de sortie 141.

Le système de crabotage 14 comprend également des roulements à billes 142 agencés entre la surface radialement interne de chaque pignon d'entrée et la surface radialement externe du pignon de sortie 141.

Le pignon de sortie 141 est en outre adapté pour entraîner en rotation l'écrou 13. Le pigon 141 et l'écrou 13 sont liés par encastrement.

La paroi terminale 101 prolonge la paroi 100 jusqu'à un fond 102 s'étendant transversalement à l'axe longitudinal.

La paroi terminale 101 définit un logement destiné à recevoir la portion d'extrémité 31 de la vis de liaison 3.

Est ménagée dans la paroi terminale 101 une gorge (ou une lumière) 42 s'étendant parallèlement à l'axe longitudinal X1.

La gorge 42 est de dimensions adaptées pour recevoir le pion 40 faisant radialement saillie depuis la portion d'extrémité 31 de la vis 3. La gorge 42 présente en outre une longueur suivant l'axe longitudinal X1 supérieure au déplacement maximal de la vis dans la carter 10, de façon à autoriser un coulissement du pion 40 parallèlement à l'axe longitudinal X1.

Par ailleurs, le carter 20 de la deuxième partie 2 comprend une paroi définissant un logement pour une autre portion de la vis 3, notamment la portion d'extrémité 32.

Cette paroi s'étend autour d'un axe longitudinal X2 et comprend deux portions le long de l'axe X2 : une première portion dite paroi 200 et une portion terminale 201, dite paroi terminale, qui prolonge la paroi 200.

L'écrou 23 est agencé dans le logement localisé entre la paroi 200 et l'axe longitudinal X2.

L'écrou 23 présente une forme globalement annulaire centrée sur l'axe X2 et présente un taraudage intérieur complémentaire du filetage 30 de la vis 3. L'écrou 23 présente une longueur suivant l'axe longitudinal qui est inférieure à la longueur de la portion médiane 30 filetée de la vis 3.

La deuxième partie comprend également des roulements à billes 230 entre la paroi 201 et l'écrou 23. L'écrou 23 est mobile en rotation autour de l'axe longitudinal X2 par rapport à la paroi 200, et donc plus généralement par rapport au carter 20 de la partie 1.

L'écrou 23 est solidaire du pignon 24 qui est de forme annulaire autour de l'axe X2. Le pignon 24 engrène avec le pignon 26 monté sur l'arbre primaire C (non visible sur la figure 2, mais visible sur la figure 3).

La paroi terminale 201 prolonge la paroi 200 jusqu'à un fond 102 s'étendant transversalement à l'axe longitudinal.

La paroi terminale 201 définit un logement destiné à recevoir la portion d'extrémité 32 de la vis de liaison 3.

Est ménagée dans la paroi terminale 201 une gorge (ou une lumière) 52 s'étendant parallèlement à l'axe longitudinal X2 La gorge 52 est de dimensions adaptées pour recevoir le pion 50 faisant radialement saillie depuis la portion d'extrémité 32 de la vis 3. La gorge 52 présente en outre une longueur suivant l'axe longitudinal X2 supérieure au déplacement maximal de la vis dans le carter 20, de façon à autoriser un coulissement du pion 50 parallèlement à l'axe longitudinal X2.

Lors du montage du dispositif d'actionnement, la partie intermédiaire 30 de la vis 3 est vissée à travers chacun des deux écrous 13 et 23 de façon à faire coopérer ensemble son filetage et les taraudages complémentaires de ces écrous 13 et 23.

La portion d'extrémité 31 de la vis 3 est insérée dans le logement défini par la paroi terminale 101 du premier carter 10 de façon à être en regard du fond 101, et le pion 40 inséré dans la gorge 42. L'autre portion d'extrémité 32 de la vis 3 est insérée dans le logement défini par la paroi terminale 201 du deuxième carter 20 de façon à être en regard du fond 201, et le pion 50 de cette portion d'extrémité 32 inséré dans la gorge 52.

Les axes longitudinaux X1, X2 et X3 sont alors coaxiaux. La vis 3 est alors mobile en rotation par rapport aux deux écrous 13 et 23.

La gorge 42 et le pion 40 agencé dans la gorge 42 constituent ensemble des premiers moyens de blocage en rotation de la vis 3 autour de l'axe longitudinal X1 par rapport à la paroi 100. Par ailleurs, la gorge 52 et le pion 50 agencé dans la gorge 52 constituent ensemble des deuxièmes moyens de blocage en rotation de la vis 3 autour de l'axe longitudinal X2 par rapport à la paroi 200.

Les deux parois terminales 101 et 201 peuvent présenter des longueurs identiques. En tout état de cause, la vis 3 est de longueur supérieure à la somme des longueurs des deux logements.

Plus précisément, les gorges 42 et 52 ménagées dans les carters 10 et 20 sont de longueurs respectives limitées, de façon à limiter la course des pions, et par conséquent le déplacement en translation de la vis 3 par rapport aux carters 1 et 2. Ces gorges 42 et 52 peuvent être de longueurs égales.

La figure 2 illustre une configuration du dispositif dans laquelle la portion d'extrémité 31 occupe sa position la plus proche du fond du logement le long de l'axe X1. La vis 3 est donc dans une position rétractée au maximum dans la partie 2. Dans cette même configuration, la portion d'extrémité 32 est au plus proche de l'orifice d'accès du logement défini par la paroi 201 de la partie 3 ; la portion d'extrémité 32 est donc dans une position la plus éloignée du fond le long de l'axe X2. La vis 3 présente une longueur adaptée pour que les deux carters 10 et 20 soient en contact l'un avec l'autre dans la configuration illustrée.
De préférence, la vis est de longueur suffisante pour être déplaçable en translation sur une course de longueur sensiblement égale à la longueur de chaque paroi terminale 101, 201.

On va maintenant décrire différents modes de fonctionnement du dispositif d'actionnement.

### Commande en translation au moyen des premiers moteurs

Dans une première étape d'un premier mode de fonctionnement de l'actionneur, l'unité de commande désactive le moteur 21, et active le frein 22. Le deuxième écrou 23 se trouve alors bloqué en rotation par rapport au carter 20. Par ailleurs les moyens de blocage constitués par le pion 50 et la gorge 52 bloquent en rotation la vis de liaison 3 par rapport à l'écrou 23. En conséquence, la vis 3 est fixe par rapport au deuxième carter 20 lors que le frein 22 est actif.

Dans une deuxième étape, l'unité de commande déplace le pignon de sortie 141 du système de crabotage 14 le long de l'axe X1 pour le mettre en prise sélectivement avec le pignon d'entrée 140a.

Dans une troisième étape, l'unité de commande active sélectivement le moteur 11a et désactive sélectivement le frein correspondant 12a.

Le moteur 11a entraîne alors en rotation l'arbre primaire A. Le pignon 16a monté fixe sur cet arbre primaire A engrène avec le pignon d'entrée 140a du système de crabotage 14 en prise avec le pignon de sortie 141. Le pignon de sortie 141 entraine ainsi en rotation l'écrou 13 autour de l'axe longitudinal X1 par rapport au carter 10.

La rotation de l'écrou 13 autour de l'axe X1 sollicite la vis 3 en translation longitudinale dans le logement défini par les parois 100 et 101. Au cours de ce mouvement en translation, le pion 40 de la vis 3 glisse longitudinalement le long de la gorge 42, bloquant ainsi la rotation de la vis 3 par rapport au premier carter 10.

La vis 3 se déplace ainsi en translation par rapport au premier carter 10. Selon le sens de rotation du moteur 11a, la portion d'extrémité de la vis 31 se rapproche du fond 102 ou s'en éloigne.

Par ailleurs, la vis 3 étant fixe par rapport au deuxième carter 20 en raison de l'activation du frein 22, le deuxième carter 20 accompagne la vis 3 dans son mouvement en translation.

Le premier mode de fonctionnement permet donc de déplacer les deux carters 10 et 20 en translation l'un par rapport à l'autre (et ce sans rotation) par l'intermédiaire de la vis 3, et donc de déplacer la partie d'empennage par rapport au bâti de l'hélicoptère.

Dans une quatrième étape, l'unité de commande déplace le pignon de sortie 141 du système de crabotage 14 le long de l'axe X1 pour le mettre en prise sélectivement avec le pignon d'entrée 140b.

Dans une cinquième étape, l'unité de commande désactive le moteur 11a, active le frein correspondant 12a, active l'autre moteur 11b et désactive le frein correspondant 12b.

Le moteur 11a entraîne alors en rotation l'arbre primaire B. Le pignon 16a monté fixe sur cet arbre primaire B engrène avec le pignon d'entrée 140b du système de crabotage 14 en prise avec le pignon de sortie 141. Le pignon de sortie 141 entraine ainsi en rotation l'écrou 13 autour de l'axe longitudinal X1 par rapport au carter 10.

L'unité de commande peut ainsi utiliser les moteur 11a et 11b de la première partie 1 de façon alternée pour mettre en rotation l'écrou 13, par déplacement du pignon de sortie 141 du système de crabotage 14. Ceci permet notamment de surmonter des pannes cachées. En effet, si l'unité de commande ne faisait qu'activer un seul des deux moteurs à chaque déplacement, le second moteur ne serait jamais utilisé et on ne saurait jamais s'il est fonctionnel ou non. Le risque est donc qu'il soit en panne cachée lorsque son activation est requise.

### Commande en translation au moyen du deuxième moteur

Dans une première étape d'un deuxième mode de fonctionnement de l'actionneur, l'unité de commande désactive les moteurs 11a, 11b de la première partie 1 et active les freins correspondants 12a, 12b. Le premier écrou 13 se trouve alors bloqué en rotation. Par ailleurs, les moyens de blocage 4 constitués par le pion 40 et la gorge 42 bloquent en rotation la vis 3 par rapport à l'écrou 13. En conséquence, la vis 3 est fixe par rapport à la première partie 1 lorsque les deux freins 12a, 12b sont actifs.

Dans une deuxième étape, l'unité de commande active ensuite sélectivement le moteur 21 de la deuxième partie 2 et désactive le frein correspondant 22.

Le moteur 21 entraîne alors en rotation l'arbre primaire C. Le pignon 26 monté sur cet arbre primaire C engrène avec le pignon 24 qui lui-même entraine ainsi en rotation l'écrou 23 par rapport au carter 20.

La rotation de l'écrou 23 sollicite la vis 3 en translation longitudinale dans le logement défini par les parois 200 et 201. Au cours de ce mouvement en translation, le pion 50 de la vis 3 glisse longitudinalement le long de la gorge 52, mais bloque toute rotation de la vis 3 par rapport au deuxième carter 20.

La vis 3 se déplace ainsi en translation par rapport au deuxième carter 20. Selon le sens de rotation du moteur 21, la portion d'extrémité de la vis se rapproche du fond ou s'en éloigne.

Par ailleurs, la vis 3 étant fixe par rapport au premier carter 20 en raison de l'activation des freins 12a, 12b, le premier carter 10 accompagne la vis 3 dans son mouvement en translation.

Le deuxième mode de fonctionnement permet donc de déplacer la partie d'empennage en translation par rapport au bâti de l'hélicoptère, indépendamment du premier mode de fonctionnement précédemment décrit.

### Bascule entre le premier mode de fonctionnement et le deuxième mode de fonctionnement

Comme vu précédemment, l'unité de commande dispose de deux modes de fonctionnement pour commander le déplacement des deux carters 10, 20 en translation l'un par rapport à l'autre: en activant au moins un des moteurs 11a, 11b de la première partie 1, ou bien en activant le moteur 21 de la deuxième partie 2.

Le premier mode de fonctionnement est utilisé par l'unité de commande dans une situation de fonctionnement normal du dispositif d'actionnement.

Une détection par un capteur de la première partie 1 d'une immobilité de l'écrou alors que l'un ou l'autre des moteurs est actif signifie la présence d'un dysfonctionnement dans la chaîne de transmission mécanique utilisée dans la première partie 1 et/ou une panne du moteur utilisé par l'unité de commande.

Lors d'un tel événement, l'unité de commande commute les moteurs et les freins du dispositif de façon à basculer dans le deuxième mode de fonctionnement en mettant en œuvre les quatrième et cinquième étapes décrites précédemment.

De façon similaire, l'unité de commande peut commuter les moteurs et les freins du dispositif de façon à basculer du deuxième mode de fonctionnement au premier mode de fonctionnement dans le cas où des capteurs de la deuxième partie 2 détectent une immobilité de l'écrou alors que le moteur 22 est actif.

L'invention ne se limite pas aux modes de réalisation précédemment décrits.

Dans une variante de réalisation non illustrée, l'élément de liaison 3 est un écrou et les deux éléments 13, 23 sont des vis entraînées en rotation par les moteurs 11a, 11b, 21.

Le système de crabotage peut être remplacé par un différentiel comprenant deux pignons d'entrée, chaque pignon d'entrée étant propre à être entraîné par l'un des deux moteurs, et un pignon de sortie propre à entraîner en rotation l'élément mobile 13.

Ce différentiel autorise une activation simultanée des deux moteurs 11a, 11b de la première partie 1. Les deux freins sont dans ce cas désactivés simultanément.

Ce différentiel n'a en outre pas besoin d'être piloté par l'unité de commande au cours de la mise en œuvre du procédé décrit précédemment.

## Revendications

1. Dispositif d'actionnement pour déplacer une partie d'un empennage d'un hélicoptère, le dispositif comprenant :
- une première partie (1) comprenant un premier carter (10) destiné à être fixé à un bâti de l'hélicoptère, un premier élément (13) monté mobile en rotation par rapport au premier carter (10) et un premier moteur (11a, 11b) propre à entraîner en rotation le premier élément (13), **caractérisé en ce qu'**il comprend
- une deuxième partie (2), mobile par rapport à la première partie, comprenant un deuxième carter (20) destiné à être fixé à la partie d'empennage, un deuxième élément (23) monté mobile en rotation par rapport au deuxième carter (20) et un deuxième moteur (21) propre à entraîner en rotation le deuxième élément (23),
- un élément de liaison (3) pour relier la première partie avec la deuxième partie, l'élément de liaison :
o étant mobile en translation par rapport au premier élément (13) l'élément de liaison (3) formant avec le premier élément (13) une vis et un écrou, de sorte qu'une rotation du premier élément (13) par rapport à l'élément de liaison (3) entraine une translation de l'élément de liaison (3) par rapport au premier élément (13), et
o étant mobile en translation par rapport au deuxième élément (23), l'élément de liaison (3) formant avec le deuxième élément (23) une vis et un écrou, de sorte qu'une rotation du deuxième élément (23) par rapport à l'élément de liaison (3) entraine une translation de l'élément de liaison (3) par rapport au deuxième élément (23),
dans lequel le premier élément (13) et le deuxième élément (23) sont deux écrous, et l'élément de liaison (3) forme une vis couplée à chaque écrou (13, 23).

2. Dispositif selon la revendication 1, comprenant des premiers moyens de blocage en rotation (40, 42) de l'élément de liaison (3) par rapport au premier carter (10) et des deuxièmes moyens de blocage (50, 52) en rotation de l'élément de liaison (3) par rapport au deuxième carter (20).

3. Dispositif selon la revendication 2, dans lequel l'un des moyens de blocage comprend une gorge (42, 52) et un pion (40, 50) mobile dans la gorge.

4. Dispositif selon la revendication 3, dans lequel le pion (40, 50) est solidaire de l'élément de liaison (3) et la gorge (42, 52) est ménagée dans l'un des carters (10, 20).

5. Dispositif selon l'une des revendications 1 à 4, dans lequel l'une (1) des parties, dite partie principale, comprend deux moteurs (11a, 11b), chaque moteur étant propre à entrainer en rotation l'élément (13) mobile en rotation de la partie principale (1).

6. Dispositif selon la revendication 5, dans lequel l'autre partie (2), dite partie auxiliaire, ne comprend qu'un seul moteur (21) propre à entrainer en rotation l'élément (23) mobile en rotation de la partie auxiliaire (2).

7. Dispositif selon l'une des revendications 5 et 6, dans lequel la partie principale comprend un système de crabotage (14) comprenant deux pignons d'entrée, chaque pignon d'entrée étant propre à être entraîné par l'un des deux moteurs (11a, 11b), et un pignon de sortie propre à entraîner en rotation l'élément (13) mobile en rotation de la partie principale (1), le système de crabotage (14) étant adapté pour accoupler sélectivement le pignon de sortie avec l'un des deux pignons d'entrée.

8. Dispositif selon l'une des revendications 5 et 6, dans lequel la partie principale (1) comprend un différentiel (14) comprenant deux pignons d'entrée, chaque pignon d'entrée étant propre à être entraîné par l'un des deux moteurs, et un pignon de sortie propre à entraîner en rotation l'élément mobile (13) en rotation de la partie principale (1).

9. Dispositif selon l'une des revendications 5 à 8, dans lequel la partie principale est la première partie (1).

10. Dispositif selon l'une des revendications 5 à 9, comprenant en outre une unité de commande configurée pour activer alternativement les deux moteurs (11a, 11b) de la partie principale (1).

11. Dispositif selon l'une des revendications 5 à 10, comprenant en outre au moins un capteur (R1-R6) de position de l'élément monté mobile par rapport au premier carter, et/ou au moins un capteur (R7-R12) de position de l'élément monté mobile par rapport au deuxième carter.

12. Dispositif selon la revendication 11, dans lequel l'unité de commande est en outre configurée pour activer sélectivement le moteur de la partie auxiliaire, lorsque le capteur (R1-R6) détecte une immobilité de l'élément (13) mobile en rotation alors que l'un et/ou l'autre des moteurs (11a, 11b) de la partie principale (1) est activé.

13. Dispositif selon l'une des revendications 10 à 12, dans lequel chaque partie (1, 2) comprend un frein (12a, 12b, 22) propre à bloquer le moteur (11a, 11b, 21) de la partie (1, 2), et l'unité de commande est configurée pour activer le frein (12a, 12b, 22) lorsque le moteur (11a, 11b, 21) n'est pas activé.

14. Hélicoptère comprenant un bâti, un plan horizontal, et un dispositif selon l'une des revendications 1 à 13 agencé pour déplacer le plan horizontal par rapport au bâti.

## Patentansprüche

1. Betätigungsvorrichtung zum Versetzen eines Teiles eines Flugwerks eines Hubschraubers, wobei die Vorrichtung umfasst:
- einen ersten Teil (1), umfassend ein erstes Gehäuse (10), das dazu bestimmt ist, auf einem Gestell des Hubschraubers befestigt zu sein, ein erstes Element (13), das mobil in Rotation in Bezug auf das erste Gehäuse (10) montiert ist, und einen ersten Motor (11a, 11b), der geeignet ist, das erste Element (13) in Rotation anzutreiben, **dadurch gekennzeichnet, dass** sie umfasst
- einen zweiten Teil (2), der mobil in Bezug auf den ersten Teil ist, umfassend ein zweites Gehäuse (20), das dazu bestimmt ist, auf dem Flugwerk-Teil befestigt zu sein, ein zweites Element (23), das mobil in Rotation in Bezug auf das zweite Gehäuse (20) montiert ist, und einen zweiten Motor (21), der geeignet ist, das zweite Element (23) in Rotation anzutreiben,
- ein Verbindungselement (3) zum Verbinden des ersten Teils mit dem zweiten Teil, wobei das Verbindungselement:
o in Translation in Bezug auf das erste Element (13) mobil ist, wobei das Verbindungselement (3) mit dem ersten Element (13) eine Schraube und eine Mutter derart bildet, dass eine Rotation des ersten Elements (13) in Bezug auf das Verbindungselement (3) eine Translation des Verbindungselements (3) in Bezug auf das erste Element (13) antreibt und
o in Translation in Bezug auf das zweite Element (23) mobil ist, wobei das Verbindungselement (3) mit dem zweiten Element (23) eine Schraube und eine Mutter derart bildet, dass eine Rotation des zweiten Elements (23) in Bezug auf das Verbindungselement (3) eine Translation des Verbindungselements (3) in Bezug auf das zweite Element (23) antreibt,
bei dem das erste Element (13) und das zweite Element (23) zwei Muttern sind und das Verbindungselement (3) eine an jede Mutter (13, 23) gekoppelte Schraube bildet.

2. Vorrichtung gemäß Anspruch 1, umfassend erste Feststellmittel in Rotation (40, 42) des Verbindungselements (3) in Bezug auf das erste Gehäuse (10) und zweite Feststellmittel (50, 52) in Rotation des Verbindungselements (3) in Bezug auf das zweite Gehäuse (20).

3. Vorrichtung gemäß Anspruch 2, bei der eines der Feststellmittel eine Auskehlung (42, 52) und einen in der Auskehlung mobilen Stift (40, 50) umfasst.

4. Vorrichtung gemäß Anspruch 3, bei der der Stift (40, 50) fest mit dem Verbindungselement (3) verbunden ist und die Auskehlung (42, 52) in einem der Gehäuse (10, 20) ausgespart ist.

5. Vorrichtung gemäß einem der Ansprüche 1 bis 4, bei der einer (1) der Teile, bezeichnet als Hauptteil, zwei Motoren (11a, 11b) umfasst, wobei jeder Motor geeignet ist, das in Rotation mobile Element (13) des Hauptteils (1) in Rotation anzutreiben.

6. Vorrichtung gemäß Anspruch 5, bei der der andere Teil (2), bezeichnet als Hilfsteil, nur einen Motor (21) umfasst, der geeignet ist, das in Rotation mobile Element (23) des Hilfsteils (2) in Rotation anzutreiben.

7. Vorrichtung gemäß einem der Ansprüche 5 und 6, bei dem der Hauptteil ein Klauenkupplungssystem (14) umfasst, umfassend zwei Eingangsritzel, wobei jedes Eingangsritzel geeignet ist, durch einen der zwei Motoren (11a, 11b) angetrieben zu sein, und ein Ausgangsritzel, das geeignet ist, das in Rotation mobile Element (13) des Hauptteils (1) in Rotation anzutreiben, wobei das Klauenkupplungssystem (14) geeignet ist, um das Ausgangsritzel selektiv mit einem der zwei Eingangsritzel zu koppeln.

8. Vorrichtung gemäß einem der Ansprüche 5 und 6, bei der der Hauptteil (1) ein Ausgleichsgetriebe (14) umfasst, umfassend zwei Eingangsritzel, wobei jedes Eingangsritzel geeignet ist, von einem der zwei Motoren angetrieben zu sein, und ein Ausgangsritzel, das geeignet ist, das in Rotation mobile Element (13) des Hauptteils (1) in Rotation anzutreiben.

9. Vorrichtung gemäß einem der Ansprüche 5 bis 8, bei der der Hauptteil der erste Teil (1) ist.

10. Vorrichtung gemäß einem der Ansprüche 5 bis 9, umfassend darüber hinaus eine Steuereinheit, die ausgestaltet ist, um die zwei Motoren (11a, 11b) des Hauptteils (1) abwechselnd zu aktivieren.

11. Vorrichtung gemäß einem der Ansprüche 5 bis 10, umfassend darüber hinaus wenigstens einen Positionssensor (R1-R6) des mobil in Bezug auf das erste Gehäuse montierte Element und/oder wenigstens einen Positionssensor (R7-R12) des in Bezug auf das zweite Gehäuse mobil montierten Elements.

12. Vorrichtung gemäß Anspruch 11, bei der die Steuereinheit darüber hinaus zum selektiven Aktivieren des Motors des Hilfsteils ausgestaltet ist, wenn der Sensor (R1-R6) eine Unbeweglichkeit des in Rotation mobilen Elements (13) detektiert, während der eine und/oder der andere Motor (11a, 11b) des Hauptteils (1) aktiviert ist.

13. Vorrichtung gemäß einem der Ansprüche 10 bis 12, bei der jeder Teil (1, 2) eine Bremse (12a, 12b, 22) umfasst, die geeignet ist, den Motor (11a, 11b, 21) des Teils (1, 2) zu blockieren, und die Steuereinheit ausgestaltet ist, um die Bremse (12a, 12b, 22) zu aktivieren, wenn der Motor (11a, 11b, 21) nicht aktiviert ist.

14. Hubschrauber, umfassend ein Gestell, eine horizontale Ebene und eine Vorrichtung gemäß einem der Ansprüche 1 bis 13, die angeordnet ist, um die horizontale Ebene in Bezug auf das Gestell zu versetzen.

## Claims

1. Actuating device for moving a helicopter tail part, the device comprising:
- a first part (1) comprising a first casing (10) intended to be fixed to a frame of the helicopter, a first element (13) mounted in rotation with respect to the first casing (10) and a first motor (11a, 11b) able to rotate the first element (13), **characterised in that** it comprises
- a second part (2), mobile with respect to the first part, comprising a second casing (20) intended to be fixed to the tail part, a second element (23) mounted in rotation with respect to the second casing (20) and a second motor (21) able to rotate the second element (23) in rotation,
- a connecting element (3) to connect the first part with the second part, the connecting element:
o being mobile in translation with respect to the first element (13) the connecting element (3) forming with the first element (13) a screw and a nut, in such a way that a rotation of the first element (13) with respect to the connecting element (3) causes a translation of the connecting element (3) with respect to the first element (13), and
o being mobile in translation with respect to the second element (23), the connecting element (3) forming with the second element (23) a screw and a nut, in such a way that a rotation of the second element (23) with respect to the connecting element (3) causes a translation of the connecting element (3) with respect to the second element (23),
wherein the first element (13) and the second element (23) are two nuts, and the connecting element (3) forms a screw coupled to each nut (13, 23).

2. Device according to claim 1, comprising first means of blocking in rotation (40, 42) of the connecting element (3) with respect to the first casing (10) and second means of blocking (50, 52) in rotation of the connecting element (3) with respect to the second casing (20).

3. Device according to claim 2, wherein one of the means of blocking comprises a groove (42, 52) and a pin (40, 50) mobile in the groove.

4. Device according to claim 3, wherein the pin (40, 50) is integral with the connecting element (3) and the groove (42, 52) is arranged in one of the casings (10, 20).

5. Device according to one of claims 1 to 4, wherein one (1) of the parts, referred to as main part, comprises two motors (11a, 11b), each motor being able to rotate the element (13) mobile in rotation of the main part (1).

6. Device according to claim 5, wherein the other part (2), referred to as auxiliary part, comprises only a single motor (21) able to rotate the element (23) mobile in rotation of the auxiliary part (2) .

7. Device according to one of claims 5 and 6, wherein the main part comprises a clutch system (14) comprising two input gears, each input gear being able to be driven by one of the two motors (11a, 11b), and an output gear able to rotate the element (13) mobile in rotation of the main part (1), the clutch system (14) being adapted to selectively couple the output gear with one of the two input gears.

8. Device according to one of claims 5 and 6, wherein the main part (1) comprises a differential (14) comprising two input gears, each input gear being able to be driven by one of the two motors, and an output gear able to rotate the element mobile (13) in rotation of the main part (1).

9. Device according to one of claims 5 to 8, wherein the main part is the first part (1).

10. Device according to one of claims 5 to 9, further comprising a control unit configured to alternatively activate the two motors (11a, 11b) of the main part (1).

11. Device according to one of claims 5 to 10, further comprising at least one sensor (R1-R6) of the position of the element mounted mobile with respect to the first casing, and/or at least one sensor (R7-R12) of the position of the element mounted mobile with respect to the second casing.

12. Device according to claim 11, wherein the control unit is furthermore configured to selectively activate the motor of the auxiliary part, when the sensor (R1-R6) detects an immobility of the element (13) mobile in rotation when one or the other of the motors (11a, 11b) of the main part (1) is activated.

13. Device according to one of claims 10 to 12, wherein each part (1, 2) comprises a brake (12a, 12b, 22) able to block the motor (11a, 11b, 21) of the part (1, 2), and the control unit is configured to activate the brake (12a, 12b, 22) when the motor (11a, 11b, 21) is not activated.

14. Helicopter comprising a frame, a horizontal plane, and a device according to one of claims 1 to 13 arranged to move the horizontal plane with respect to the frame.
